# EUROPEAN PATENT APPLICATION

(11) **EP 1 670 191 A1**
(43) Date of publication of application: **14.06.2006**
(21) Application number: 05026997.6
(22) Date of filing: 09.12.2005
(51) Int. Cl.: H04L 12/56, H04L 29/08, H04M 1/725, H04Q 7/32

(54) **Location dependent wireless service providing**

(30) Priority: 09.12.2004 JP 2004357033; 24.11.2005 JP 2005338371
(71) Applicant: NTT DoCoMo, Inc., Tokyo (JP)
(72) Inventor: Azami, Toshihiro, Int. Prop. Dept., NTT DoCoMo, In, Chiyoda-ku Tokyo (JP); Inamura, Hiroshi, Int. Prop. Dept., NTT DoCoMo, In, Chiyoda-ku Tokyo (JP); Nakayama, Takehiro, Int. Prop. Dept., NTT DoCoMo, Chiyoda-ku Tokyo (JP); Yukimoto, Hideki, Int. Prop. Dept., NTT DoCoMo, Chiyoda-ku Tokyo (JP); Suzuki, Toshiyuki, Int. Prop. Dept., NTT DoCoMo, Chiyoda-ku Tokyo (JP); Takeshita, Atsushi, Int. Prop. Dept., NTT DoCoMo, Chiyoda-ku Tokyo (JP); Etoh, Minoru, Int. Prop. Dept., NTT DoCoMo, Chiyoda-ku Tokyo (JP)
(74) Representative: HOFFMANN EITLE

(57) **Abstract**

A service providing system provides a portable terminal having a wireless communication function with a service effective only in a specific area. The service providing system includes an entrance gate (2) installed at an entrance of the specific area. The entrance gate (2) includes specific area service notifying unit (21) configured to notify the portable terminal of a type of service necessary in the specific area by means of wireless communication.

## Description

### CROSS REFERENCE TO RELATED APPLICATIONS

This application is based upon and claims the benefit of priority from prior Japanese Patent Application P2004-357033 filed on December 9, 2004 and Japanese Patent Application P2005-338371 filed on November 24, 2005; the entire contents of which are incorporated by reference herein.

### BACKGROUND OF THE INVENTION

### 1. Field of the Invention

The present invention relates to a service providing system, a portable terminal and a control program for a portable terminal.

### 2. Description of the Related Art

There are conventional technologies for turning off the power supply of a portable telephone (for example, see Japanese Patent Laid-Open Publication No. 2000-287259 and Japanese Patent Laid-Open Publication No.2002-165268) and for turning off a ring tone of a portable telephone (for example, see Japanese Patent Laid-Open Publication No. 2002-262359) once the portable telephone is inside a particular area such as an exhibition hall and a museum.

Although these technologies can limit portable telephone's operations improper for the specific areas, they cannot provide a portable phone with services suitable for specific areas.

Indeed, there are services for providing specific applications through dedicated portable terminals in museums and the like. However, there has been a problem of cost burdens on service providers for preparing the dedicated terminals and for hiring personnel to rent out the terminals.

Moreover, there has been a problem for users; these terminals are new to users and they are thus compelled to deal with unfamiliar operations.

Therefore, in view of the above problems, an objective of the present invention is to provide a service providing system, a portable terminal and a control computer program product for the portable terminal that do not cause any cost increase and can be operated by a user easily when offering a service suitable for a specific area.

### SUMMARY OF THE INVENTION

A first aspect of the present invention is to provide a service providing system for providing a portable terminal having a wireless communication function with a service effective only in a specific area, including (A) an entrance gate, installed at an entrance of the specific area, includes specific area service notifying unit configured to notify the portable terminal of a type of service necessary in the specific area by means of wireless communication.

A second aspect of the present invention is to provide a service providing system for providing a portable terminal having a wireless communication function with a service effective only in a specific area, including: (A) an entrance gate, installed at an entrance of the specific area, includes enable notifying unit configured to notify the portable terminal of an enable signal by means of wireless communication, the enable signal making a service pre-stored in the portable terminal and necessary in the specific area available.

A third aspect of the present invention is to provide a portable terminal including connecting unit to a communication network and application executing unit, including: (A) a gate signal detecting unit configured to detect a signal transmitted from an entrance gate installed at an entrance of a specific area by means of wireless communication; (B) specific area service determining unit configured to determine from the transmitted signal that a specific service is now necessary; and (C) specific area service downloading unit configured to download the service by wire or wirelessly based upon a result of determination made by the specific area service determining unit.

A forth aspect of the present invention is to provide a portable terminal including connecting unit with a communication network and application executing unit, including: (A) enable signal detecting unit configured to detect an enable signal transmitted by means of wireless communication from an entrance gate installed at an entrance of a specific area; (B) specific area service determining unit configured to determine from the enable signal that a specific service is now necessary; and (C) specific area service enabling unit configured to make the service available based upon a result of determination made by the specific area service determining unit.

A fifth aspect of the present invention is to provide a control computer program product to be executed by a portable terminal, including: (A) instructions configured to detect a signal transmitted by means of wireless communication from an entrance gate installed at an entrance of a specific area to a portable terminal having connecting unit to a communication network and application executing unit; (B) instructions configured to determine from the transmitted signal that a specific service is now necessary; and (C) instructions configured to download the service by wire or wirelessly based upon a result of determination made at the step of determining that the specific service is now necessary.

### BRIEF DESCRIPTION OF DRAWINGS

Fig. 1 is a structural block diagram (No. 1) of a service providing system according to a first embodiment.
Fig. 2 is a structural block diagram of a portable terminal according to the first embodiment.
Fig. 3 is a structural block diagram (No. 2) of the service providing system according to the first embodiment.
Fig. 4 is a structural block diagram of a portable telephone according to the first embodiment.
Fig. 5 is a flowchart (No. 1) showing a service providing method according to the first embodiment.
Fig. 6 is a flowchart (No. 2) showing the service providing method according to the first embodiment.
Fig. 7 is a flowchart (No. 3) showing a service providing method according to the first embodiment.
Fig. 8 is a flowchart (No. 4) showing a service providing method according to the first embodiment.
Fig. 9 is a structural block diagram of a portable telephone according to a second embodiment.
Fig. 10 is a flowchart showing a service providing method according to the second embodiment.
Fig. 11 is a structural block diagram of a portable telephone according to a third embodiment.
Fig. 12 is a flowchart showing a service providing method according to the third embodiment.
Fig. 13 is a structural block diagram of a service providing system according to a fourth embodiment.
Fig. 14 is a structural block diagram of a portable terminal according to the fourth embodiment.
Fig. 15 is a flowchart (No. 1) showing a service providing method according to the fourth embodiment.
Fig. 16 is a flowchart (No. 2) showing the service providing method according to the fourth embodiment.
Fig. 17 is a structural block diagram of a service providing system according to a fifth embodiment.
Fig. 18 is a structural block diagram of a portable telephone according to the fifth embodiment.
Fig. 19 is a flowchart showing a service providing method according to the fifth embodiment.
Fig. 20 the a structural block diagram of a service providing system according to a sixth embodiment.
Fig. 21 is a flowchart showing a service providing method according to the sixth embodiment.
Fig. 22 is a structural block diagram (No. 1) of a service providing system according to a seventh embodiment.
Fig. 23 is a structural block diagram of a portable terminal according to the seventh embodiment.
Fig. 24 is a structural block diagram (No. 2) of the service providing system according to the seventh embodiment;
Fig. 25 is a flowchart showing a service providing method according to an eighth embodiment.
Fig. 26 is a structural block diagram of a portable telephone according to a ninth embodiment.
Fig. 27 is a flowchart showing a service providing method according to the ninth embodiment.
Fig. 28 is a structural block diagram of a service providing system according to a tenth embodiment.
Fig. 29 is a structural block diagram of a portable telephone according to the tenth embodiment.
Fig. 30 is a flowchart (No. 1) showing a service providing method according to the tenth embodiment.
Fig. 31 is a flowchart (No. 2) showing the service providing method according to the tenth embodiment.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

### <First Embodiment>

### (Service Providing System)

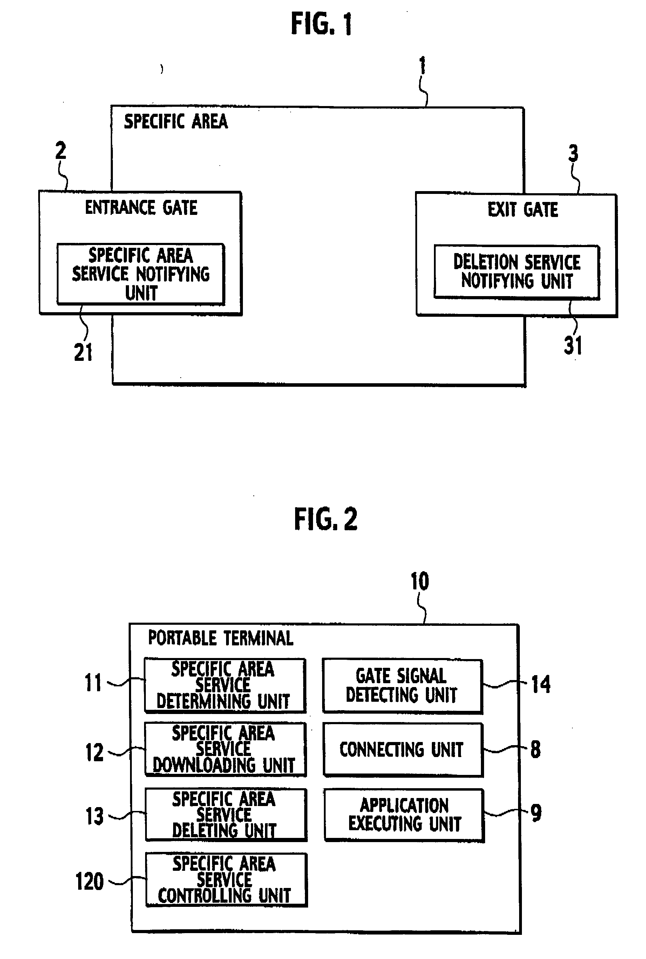

As shown in Fig. 1, a service providing system according to a first embodiment is provided with an entrance gate 2 and an exit gate 3. The entrance gate 2 is installed at the entrance of a specific area 1 and has a function of wireless communication with a portable terminal 10. The exit gate 3 is installed at the exit of the specific area 1 and has a function of wireless communication with the portable terminal 10. Here, the specific area represents, for example, an exhibition area of an exhibition hall or a museum.

As shown in Fig. 2, the entrance gate 2 includes a specific area service notifying unit 21 for notifying the portable terminal 10 of a type of application or content necessary in the specific area 1 by means of wireless communication. The specific area service notifying unit 21 also notifies an effective period for the application or content, effective time for the application or content, an effective geographic area, or expiry time for the application or content.

The exit gate 3 includes service deletion notifying unit 31 for notifying the portable terminal 10 of a type of application or content to be deleted, by means of wireless communication.

As shown in Fig. 2, the portable terminal 10 according to the first embodiment includes connecting unit 8 to a communication network, application executing unit 9 for executing an application, specific area service determining unit 11, specific area service downloading unit 12, specific area service deleting unit 13, gate signal detecting unit 14, and specific area service controlling unit 120.

The specific area service determining unit 11 determines from a signal transmitted from the entrance gate 2 that a specific application or content is now necessary. The specific area service determining unit 11 also determines from a signal transmitted from the exit gate 3 that a specific application or content is to be deleted.

The specific area service downloading unit 12 downloads an application or content by wire or wirelessly based upon a determination result from the specific area service determining unit 11.

The specific area service deleting unit 13 deletes an application or content based upon a determination result from the specific area service determining unit 11. Further, when an effective period of an application or content is notified by the entrance gate 2, or such duration is notified as information associated with a downloaded application or content, the specific area service deleting unit 13 activates a timer in the terminal and deletes the application or content upon timer time out. When expiry time for an application or content is notified by the exit gate 3 or such time is notified as information associated with a downloaded application of content, the specific area service deleting unit 13 stores the expiry time and deletes the application or content once a clock in the terminal reaches the stored time.

When effective time for an application or content is notified by the entrance gate 2, or such time is notified as information associated with a downloaded application or content, the specific area service controlling unit 120 stores the effective time, makes the application or content unavailable, and, when the clock in the terminal reaches the stored time, makes the application or content available.

The gate signal detecting unit 14 detects a signal transmitted by means of wireless communication from the entrance gate 2 installed at the entrance of the specific area 1. Moreover, the gate signal detecting unit 14 detects a signal transmitted by means of wireless communication from the exit gate 3 installed at the exit of the specific area 1.

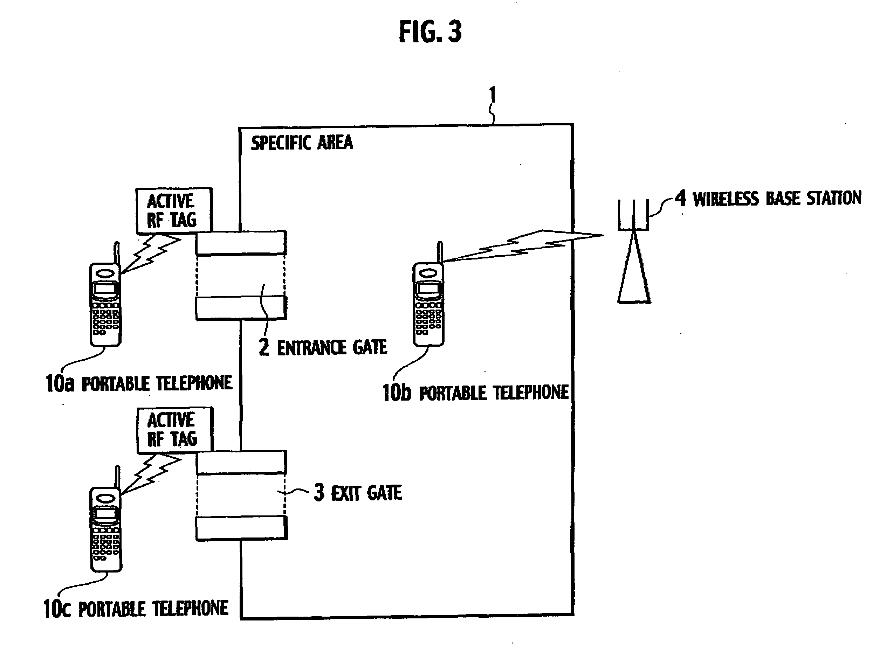

Next, an example is described with reference to Fig. 3 where an active RF tag is employed as the specific area service notifying unit 21 of the service providing system. Fig. 3 also depicts a portable telephone 10a which reads an active RF tag at the entrance gate 2, a portable telephone 10b which downloads an application through a wireless circuit, and a portable telephone 10c which reads an active RF tag at the exit gate 3.

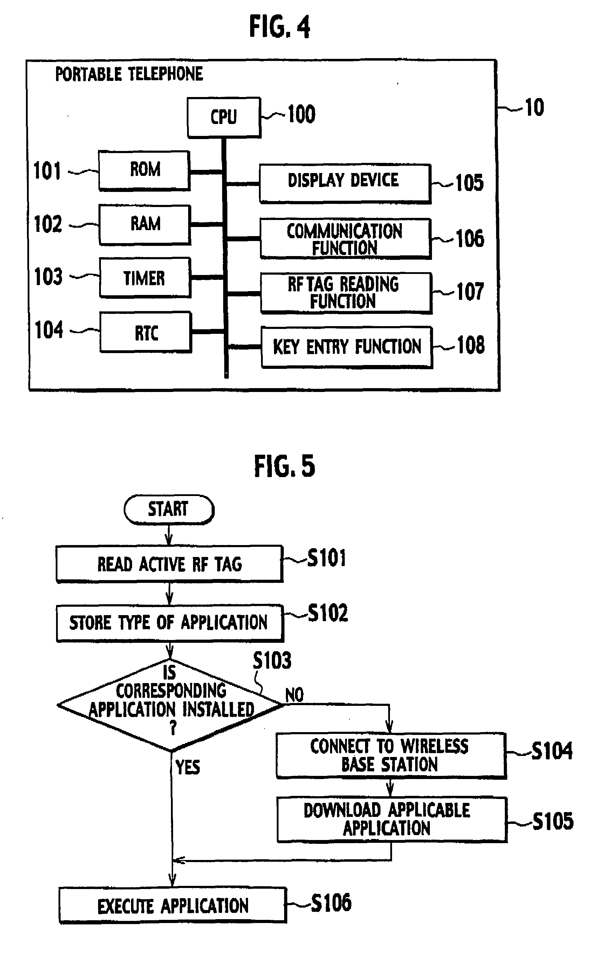

A structure of the portable telephone 10 is shown in Fig. 4 as a specific example of the portable terminal. The portable telephone 10 includes a CPU 100, a ROM 101, a RAM 102, a timer 103, a RTC 104, a display device 105, a communication function 106, an RF tag reading function 107, and a key entry function 108.

The CPU 100 can execute the foregoing specific area service determining unit 11, the specific area service downloading unit 12, the specific area service deleting unit 13, the gate signal detecting unit 14, the specific area service controlling unit 120 and the like as modules.

The ROM 101 and the RAM 102 function as storages for storing transient processing results and program holding sections for accumulating programs causing the CPU 100 to execute the aforementioned processing as specific area service determination, specific area service downloading, specific area service deletion, gate signal detection, and specific area service control.

The timer 103 has a function of measuring time.

The RTC 104 functions as a real time clock within the terminal.

The display device 105 is a screen of a monitor or the like and may be a liquid crystal display (LCD), a light-emitting diode (LED) panel, an electro luminescence (EL) panel and the like.

The communication function 106 represents a function of the connecting unit 8 described earlier.

The RF tag reading function 107 reads the RF tags at the entrance gate 2 and the exit gate 3.

The key entry function 108 represents equipment such as input buttons. Once an input operation is performed by the key entry function 108, corresponding key information is sent to the CPU 100.

### (Service Providing Method)

Next, a service providing method according to the first embodiment is described with reference to Figs. 5 to 8.

Fig. 5 shows processing carried out in the portable telephone 10 shown in Fig. 4 when the portable telephone 10 passes through the entrance gate 2 shown in Fig. 3. As for timing of reading the active RF tag, the portable telephone 10 may always be able to read it or may read it in accordance with a user's operation.

First, in step S101, the portable telephone 10 reads the active RF tag of the entrance gate 2. Information notified by the active RF tag includes a "gate ID" representing the identification number of the gate, an "entrance/exit identifier" indicating that the gate is the entrance or exit, and a "type of application" necessary in the specific area. In the example in Fig. 5, the "entrance/exit identifier" indicates an entrance. Therefore, the application executing unit 9 may use the "type of application" from the active RF tag as it is to determine an application required in the specific area.

Next, in step S102, the portable telephone 10 stores the type of application using the RAM 102 or the like.

Next, in step S103, the portable telephone 10 determines if corresponding application is installed within itself. If such application is present, the portable telephone 10 executes the application in step S106.

Where there is not the application, the portable telephone 10 connects itself to a wireless base station 4 in step S104. Thereafter, the portable telephone 10 downloads the application in step S105 and executes the same in step S106.

Note that, in Fig. 5, the portable telephone 10 not only downloads the applicable application but also executes the same automatically.

Even in an example where information notified by the active RF tag only has the "gate ID" representing the identification number of the gate and the "entrance/exit identifier" indicating that the gate is the entrance or exit, a type of application may be determined in the following way: (1) retrieving a type of application from a correspondence table between gate IDs and types of necessary applications, pre-stored in the terminal; or (2) connecting the portable telephone 10 though a communication network to a server which stores correspondence between gate IDs and types of applications, and retrieving a type of application from the correspondence.

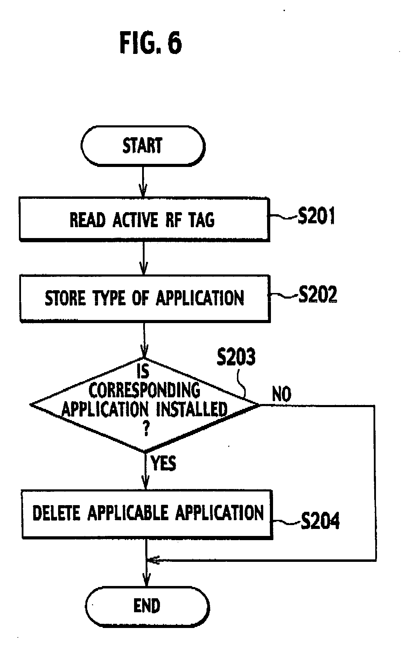

Next, Fig. 6 shows processing carried out in the portable telephone 10 shown in Fig. 4 when the portable telephone 10 passes through the exit gate 3 shown in Fig. 3. As for timing of reading the tag, the portable telephone 10 may always be able to read it or may read it in accordance with a user' s operation.

First of all, in step S201, the portable telephone 10 reads the active RF tag of the exit gate 3. Information notified by the active RF tag includes a "gate ID" representing the identification number of the gate, an "entrance/exit identifier" indicating that the gate is the entrance or exit, and a "type of application" which becomes no longer necessary when the portable telephone 10 leaves the specific area. In the example in Fig. 6, the "entrance/exit identifier" indicates an exit.

Next, in step S202, the portable telephone 10 stores the type of application using the RAM 102 or the like.

Next, in step S203, the portable telephone 10 determines whether corresponding application is installed within itself. If such application is present, the application is deleted in step S204.

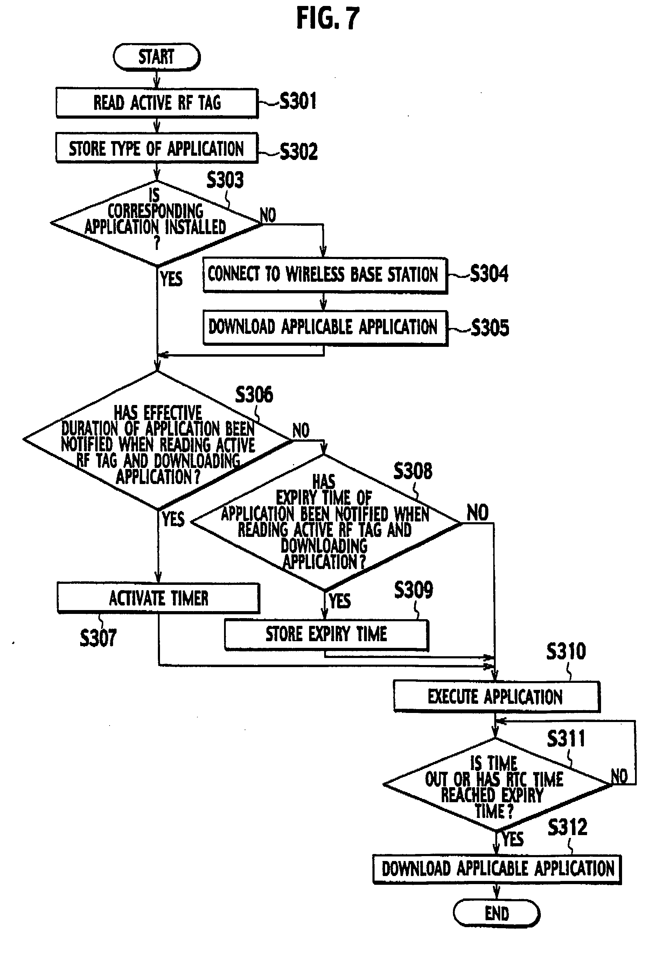

Next, Fig. 7 shows processing carried out in the portable telephone 10 when an effective period of a service is notified.

First of all, processing between steps S301 to S305 is similar to that between steps S101 to 105 in Fig. 5, and the description thereof is thus omitted.

In step S306, the portable telephone 10 determines whether an effective period of an application has been notified when reading the active RF tag or downloading the application. Where it is determined that the effective period was notified, the portable telephone 10 activates the timer 103 in step S307.

Where it is determined that the effective period was not notified, the portable telephone 10 determines in step S308 whether the expiry time for the application has been notified when reading the active RF tag or downloading the application. Where it is determined that the expiry time was notified, the portable telephone 10 stores the expiry time in step S309.

Next, in step S310, the portable telephone 10 executes the application.

Next, in step S311, the portable telephone 10 determines whether time is out for the application or the RTC 104 has reached the expiry time. If so, the portable telephone 10 deletes the applicable application in step S312.

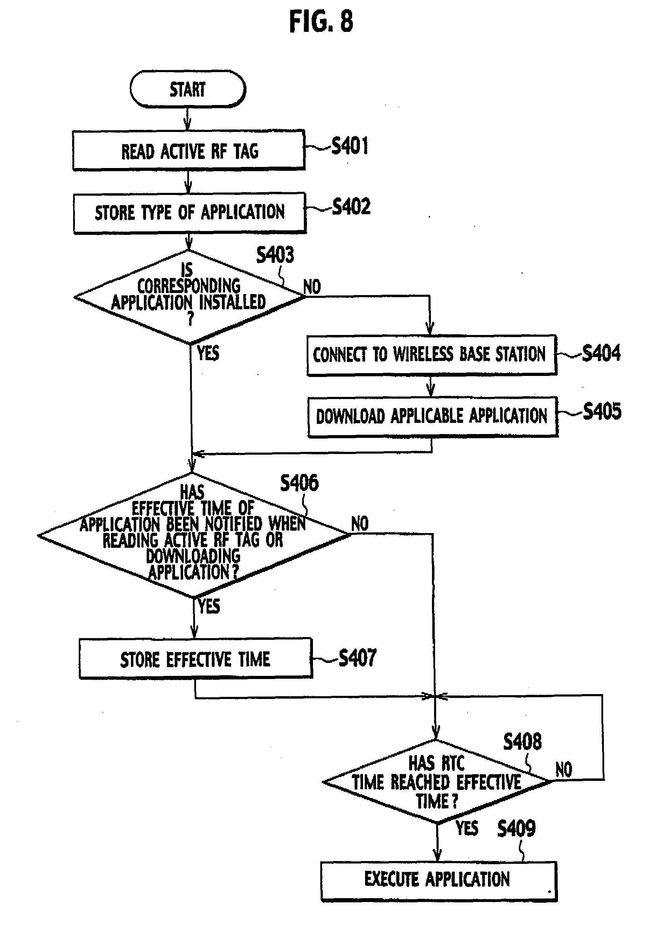

Next, Fig. 8 shows processing carried out in the portable telephone 10 when effective time for a service is notified.

First of all, processing between steps 401 to 405 is similar to that between steps S101 to S105 shown in Fig. 5, and thus the description thereof is thus omitted.

Next, in step S406, the portable telephone 10 determines whether effective time for an application was notified when reading the active RF tag or downloading the application. If that is the case, the portable telephone 10 stores the effective time in step S407.

Next, in step S408, the portable telephone 10 determines whether time shown by the RTC 104 has reached the effective time. If the effective time has been reached, the portable telephone 10 executes the application in step S409.

### (Operations and Effects)

According to the portable telephone 10 and the service providing system according to the first embodiment, when a user of the portable telephone 10 passes through the entrance gate 2 with the portable telephone 10 and enters the specific area 1, the portable telephone 1 can automatically obtain an application effective in the specific area 1. Therefore, a service provider does not need to prepare dedicated terminals in order to provide their service within the specific area 1, which contributes to a cost reduction. Moreover, users can take advantage of such service using their own terminals with familiar feeling of operation.

Further, when a user of the portable telephone 10 passes through the exit gate 3 and leaves the specific area 1 with the portable telephone 10, the portable telephone 10 can delete the application effective in the specific area 1 automatically. Accordingly, an application or content unnecessary outside the specific area 1 is not used outside the specific area 1. This enables a service provider to prevent unwanted leaks of information and also allows users to save storage areas in their terminals.

Furthermore, in the first embodiment, when the entrance gate 2 notifies the portable telephone 10 of a type of application or content necessary in the specific area 1, the gate also notifies an effective period for the application or content, or absolute expiry time for the application or content. When the effective period of the application or content is notified by the gate, the portable telephone 10 activates the timer and deletes the application or content upon timer time out. Alternatively, where the gate notifies the expiry time for the application or content, the application or content is deleted once the clock in the portable telephone reaches the expiry time. Accordingly, even where an application to be deleted is not deleted automatically at the exit gate 3 because the power of the portable telephone is off when it passes through the exit gate 3 or because the portable telephone 10 leaves the specific area without passing through the exit gate 3, such application can be deleted automatically when the power of the portable telephone 10 is turned on.

In addition, in the portable telephone 10 and the service providing system according to the first embodiment, when the portable telephone 10 passes through the entrance gate 2, the gate notifies the portable telephone of not only a type of application or content necessary in the specific area but also absolute effect time for the application or content. Therefore, the portable telephone 10 makes the application or content available once the clock in the portable telephone reaches the effective time. Accordingly, the application obtained at the entrance gate 2 can be activated from a certain time. This brings an advantageous effect on users to avoid pointless use of a specific area service during the period users cannot use the service.

### <Second Embodiment>

A second embodiment describes function and operation when the power supply of a portable telephone 10 is off.

### (Service Providing System)

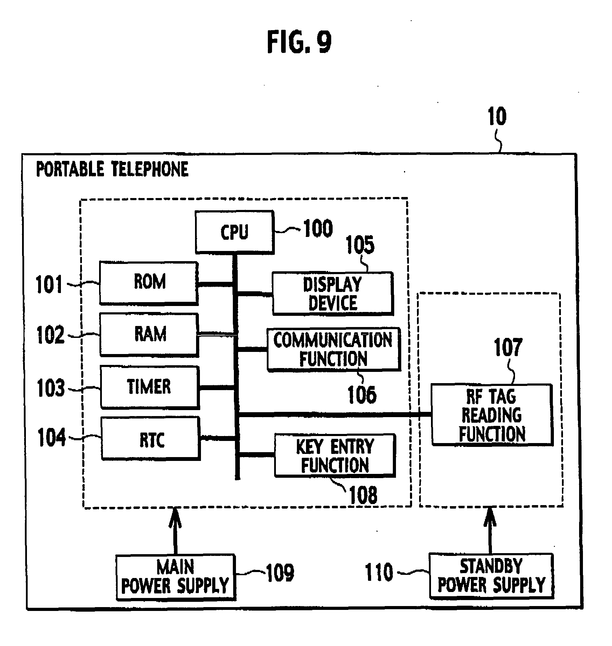

As shown in Fig. 9, the power supply of the portable telephone 10 according to the second embodiment includes a standby power supply 110 which operates an RF tag reading function 107, and a main power supply 109 which operates the rest of the functions. Even when the main power supply 109 is turned off, the standby power supply 110 is always on.

In the second embodiment, even if the power supply of a terminal is off, gate signal detecting unit 14 operates by using a dedicated power supply or using energy of electric waves transmitted from a gate as a power supply, and stores a type of the gate through which the terminal has passed, a type of application or content necessary in a specific area 1, or a type of application or content to be deleted.

Moreover, when the power supply of the terminal is turned on, specific area service determining unit 11 determines whether the gate signal detecting unit 14 has stored the type of the gate through which the terminal has passed, the type of application or content necessary in the specific area 1, or the type of application or content to be deleted.

Further, specific area service downloading unit 12 downloads an application or content by wire or wirelessly based upon a result of determination made by the specific area service determining unit 11.

Moreover, specific area service deleting unit 13 deletes an application or content based upon a result of determination by the specific area service determining unit 11.

Remaining functions of the portable telephone 10 are similar to those described in the first embodiment, and the description thereof is thus omitted.

### (Service Providing Method)

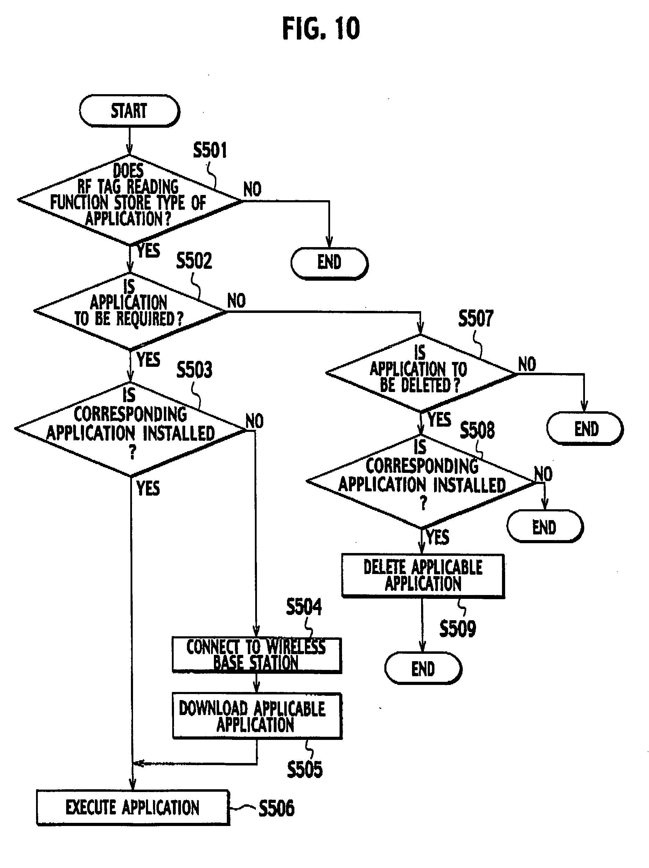

Next, a service providing method according to the second embodiment is described with reference to Fig. 10.

Fig. 10 shows processing carried out in the portable telephone 10 when the power supply thereof is turned on.

First of all, in step S501, the portable telephone 10 determines whether the RF tag reading function 107 stores a type of application. If so, the portable telephone 10 determines whether the stored type of application is necessary in step S502.

If the type of application is necessary, the portable telephone 10 determines whether corresponding application is installed within itself in step S503. Where there is an applicable application, the portable telephone 10 executes the application in step S506. Where there is no applicable application, the portable telephone 10 connects itself to a wireless base station 4 (step S504), downloads the application (step S505), and then executes the application (step S506).

In the step S502, if the stored type of application is not necessary, the processing proceeds to step S507, where the portable telephone 10 determines whether the application is the one to be deleted. If that is the case, the portable telephone 10 determines whether corresponding application is installed within itself in step S508. Where there is such an application, the portable telephone 10 deletes it in step S509.

### (Operations and Effects)

In the second embodiment, a part of the portable telephone 10 for receiving a type of application or content is always left turned on. Therefore, even when the power supply of the entire portable telephone is turned off, the portable telephone 10 can receive a type of application or content. Using this function, the portable telephone 10 downloads a necessary application or content when the power supply of the entire portable telephone is turned on. Therefore, there is an advantageous effect that even if a user enters a specific area with his/her portable telephone turned off, the user can receive a service automatically once the power of the portable telephone is turned on.

Moreover, in the second embodiment, there is another advantageous effect in that even where the power of the portable telephone is off when passing through the exit gate 3, an application or content can be deleted automatically when the power turned on.

### <Third Embodiment>

In a third embodiment, description is given about a case where a portable telephone 10 incorporates a positioning function.

### (Service Providing System)

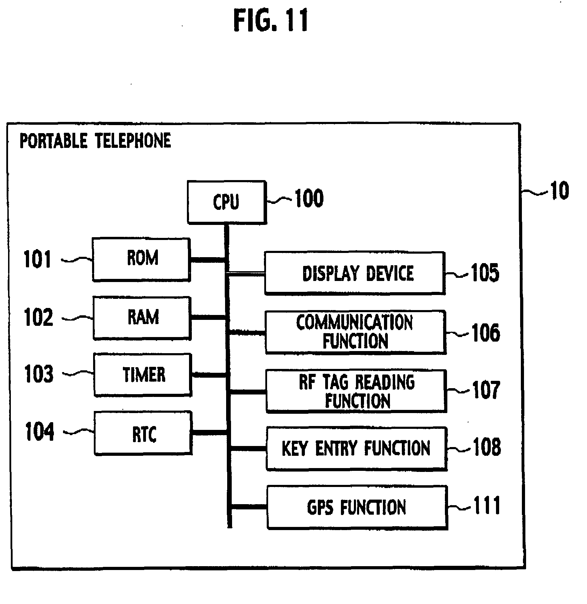

As shown in Fig. 11, a portable telephone 10 according to the third embodiment incorporates a GPS function 111 as a positioning function for measuring geographical positions.

Apart from GPS, there are known positioning methods using electric waves from a pseudo-satellite and positioning using RF tags and the like, which can also be used for the positioning function. There is another method that can also be used for the positioning function: gates store their own gate IDs, and an application corresponding to a gate ID is deleted when the portable telephone 10 passes through a different gate to which the application does not correspond.

Further, when an effective geographic area for an application or content is notified, or when the same is notified as information associated with a downloaded application or content, specific area service deleting unit 13 of the portable telephone 10 stores the geographic area and activates the positioning function in an arbitrary occasion. Thereafter, where a result from the positioning function shows that the position of the terminal is away from the stored geographic area, the specific area service deleting unit 13 deletes the application or content.

The rest of the functions of the portable telephone 10 are similar to those in the first embodiment, and the description thereof is thus omitted.

### (Service Providing Method)

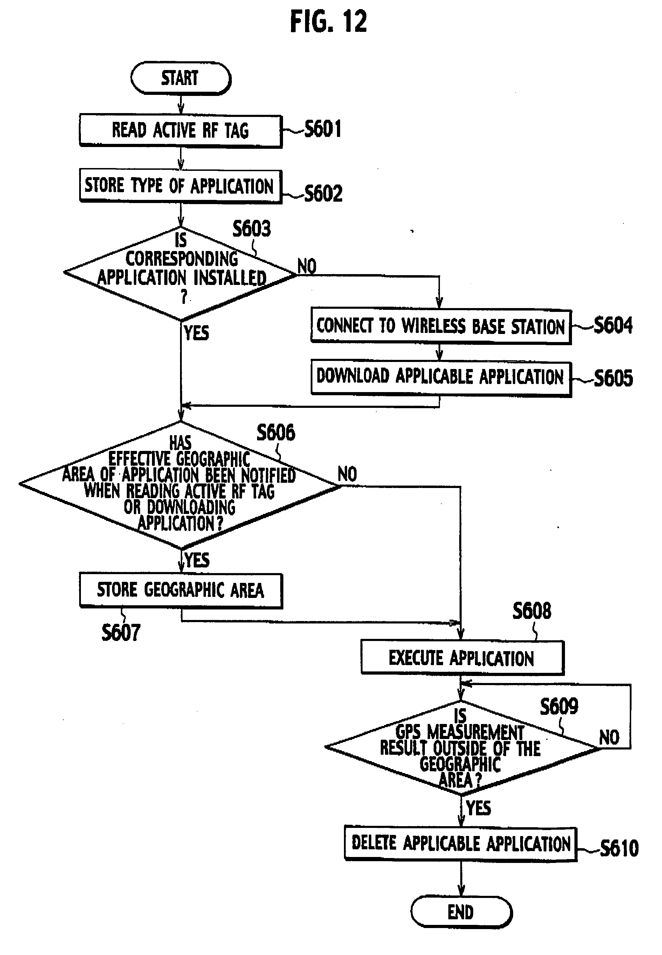

Next, a service providing method according to the third embodiment is described with reference to Fig. 12.

First of all, processing between steps S601 to S605 is similar to that between S101 to 105 shown in Fig. 5, and the description thereof is thus omitted.

In step S606, the portable telephone 10 determines whether an effective geographic area of the application was notified when reading an active RF tag or downloading an application. If the information was notified, the portable telephone 10 stores the geographic area in step S607.

Next, in step S608, the portable telephone 10 executes the application.

Next, in step S609, the portable telephone 10 determines whether a GPS measuring result shows that the portable telephone 10 is outside of the geographic area. If that is the case, the portable telephone 10 deletes the application in step S610.

### (Operations and Effects)

In the third embodiment, when the entrance gate 2 notifies the portable telephone 10, which is passing through the gate, of a type of application or content necessary in a specific area, the gate also notifies an effective geographic area for the application or content. Moreover, the portable telephone 10 is provided with the positioning function and deletes an application or content when the geographic position of the portable telephone is away from the effective area for the application or the content. Accordingly, there is an advantageous effect in that, even if the power supply of the portable telephone 10 is off when passing through the exit gate 3, or the portable telephone 10 leaves the specific area without passing through the exit gate 3, an application or content can be deleted automatically.

### <Fourth Embodiment>

### (Service Providing System)

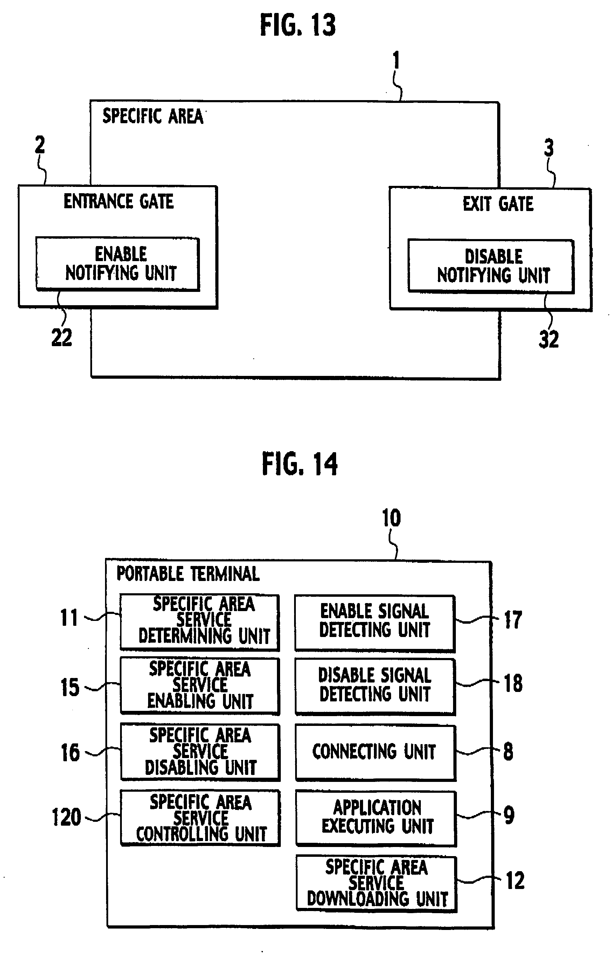

As shown in Fig. 13, a service providing system according to a fourth embodiment includes an entrance gate 2 and an exit gate 3. The entrance gate 2 is installed at the entrance of a specific area 1 and has a function of wireless communication with a portable telephone 10. The exit gate 3 is installed at the exit of the specific area 1 and has a function of wireless communication with the portable telephone 10.

The entrance gate 2 has enable notifying unit 22 for transmitting an enable signal to a portable telephone 10 by means of wireless communication. The enable signal makes an application or content that is pre-stored in the portable telephone 10 and necessary in the specific area 1 available. Further, the enable signal transmitted by the enable notifying unit 22 may also notify a version number of an application or content together with the type of the same.

The exit gate 3 has disable notifying unit 32 for transmitting a disable signal which disables an application or content pre-stored in the portable telephone 10 and necessary in the specific area.

As shown in Fig. 14, the portable telephone 10 according to the fourth embodiment includes connecting unit 8 to a communication network, application executing unit 9 for executing an application, specific area service determining unit 11, specific area service downloading unit 12, specific area service enabling unit 15, specific area service disabling unit 16, enable signal detecting unit 17, disable signal detecting unit 18, and specific area service controlling unit 120.

The enable signal detecting unit 17 detects an enable signal notified by the entrance gate 2. The enable signal may contain a version number of an application or content.

The specific area service determining unit 11 determines from the enable signal notified by the entrance gate 2 that a specific application or content is now necessary. Further, the specific area service determining unit 11 determines from the disable signal notified by the exit gate 3 that a specific application or content is no longer necessary. Furthermore, where the enable signal contains a version number, the specific area service determining unit 11 compares the version number of an application or content pre-stored in the portable telephone 10 to the version number that has been notified. Where the notified version number is newer than the one pre-stored, the specific area service determining unit 11 notifies the specific area service downloading unit 12 accordingly.

The specific area service enabling unit 15 makes an application or content available based upon a result of determination made by the specific area service determining unit 11.

The disable signal detecting unit 18 detects a disable signal notified by a gate.

The specific area service disabling unit 16 disables an application or content based upon a result of determination made by the specific area service determining unit 11.

The specific area service downloading unit 12 downloads a new version of application or content by wire or wirelessly based upon a result of determination made by the specific area service determining unit 11.

### (Service Providing Method)

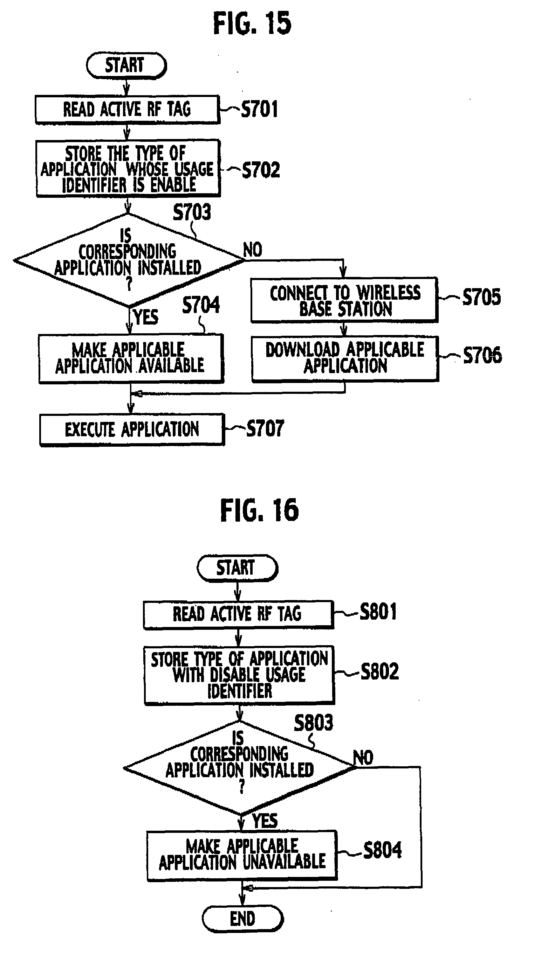

Next, a service providing method according to the fourth embodiment is described with reference to Figs. 15 to 16.

Fig. 15 shows processing carried out in the portable telephone 10 shown in Fig. 14 when the portable telephone 10 passes through the entrance gate 2 shown in Fig. 13.

First of all, in step S701, the portable telephone 10 reads an active RF tag of the entrance gate 2. Information notified by the active RF tag notifies includes a usage identifier in addition to that described in the first embodiment. The usage identifier contains an "enable identifier" and a "disable identifier." The "enable identifier" makes the notified application available and the "disable identifier" disables the same. Notification of such usage identifier has an advantageous effect as it can disable a specific application when the portable telephone 10 enters the specific area. Moreover, in a case where an application is made available whenever the portable telephone 10 enters a specific area and an application is made unavailable whenever the portable telephone 10 leaves the specific area, the "enable usage identifier" and the "disable usage identifier" may be substituted for an entrance identifier and an exit identifier respectively.

Next, in step S702, the portable telephone 10 stores a the type of application whose usage identifier is enable using a RAM 102 or the like.

Next, in step S703, the portable telephone 10 determines whether corresponding application is installed within itself. If that is the case, the portable telephone 10 makes the applicable application available in step S704 and then executes it in step S707.

Meanwhile, where there is no applicable application, the portable telephone 10 connects itself to a wireless base station 4 in step S705. Thereafter, in step S706, the portable telephone 10 downloads the applicable application and executes it in step S707.

Fig. 16 shows processing carried out by the portable telephone 10 shown in Fig. 14 when the portable telephone 10 passes through the exit gate 3 shown in Fig. 13.

First of all, in step S801, the portable telephone 10 reads an active RF tag of the exit gate 3. Information notified by the active RF tag includes the usage identifier in addition to that described in the first embodiment.

Next, in step S802, the portable telephone 10 stores a type of application with a disable usage identifier using the RAM 102 or the like.

Next, in step S803, the portable telephone 10 determines whether the applicable application is available. Where it is available, the portable telephone 10 makes the application unavailable in step S804.

### (Operations and Effects)

In the fourth embodiment, the portable telephone 10 can make an application available or unavailable in accordance with the enable signal or the disable signal notified by each gate. Therefore, a service provider does not need to prepare dedicated terminals in order to provide their service in the specific area 1, which contributes to a cost reduction. Moreover, users can take advantage of such service using their own terminals with familiar feeling of operation.

### <Fifth Embodiment>

### (Service Providing System)

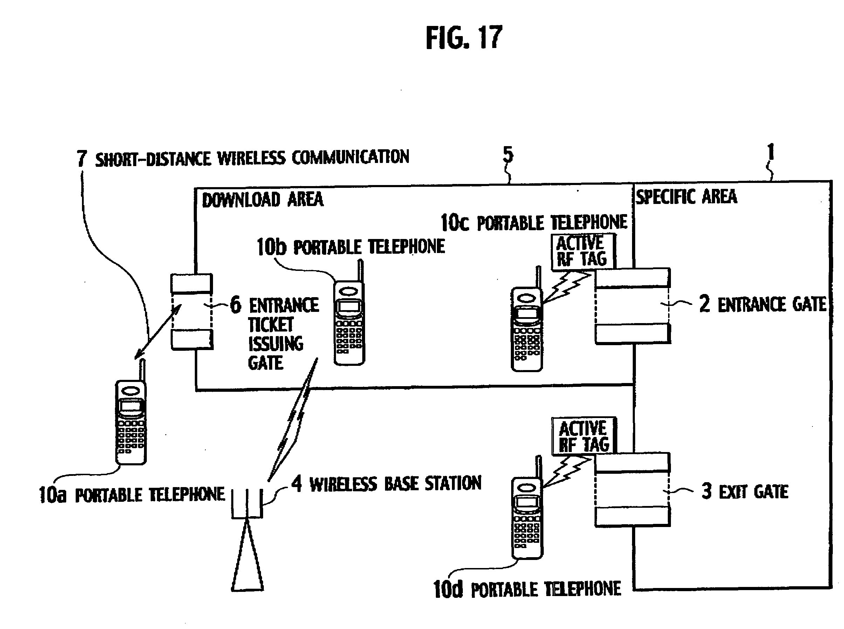

As shown in Fig. 17, a service providing system according to a fifth embodiment includes an entrance gate 2 and an exit gate 3. The entrance gate 2 is installed at the entrance of a specific area 1 and has a function of wireless communication with a portable telephone 10. The exit gate 3 is installed at the exit of the specific area 1 and has a function of wireless communication with the portable telephone 10. Here, the specific area 1 is assumed to be a place where the portable telephone 10 cannot have wireless communication with a wireless base station, for example, a cabin of a plane or a hospital.

A download area 5 is an area between an entrance ticket issuing gate 6 and the entrance gate 2 of the specific area 1, and in which the portable telephone 10 can have wireless communication with a wireless base station 4.

The entrance ticket issuing gate 6 performs short-distance wireless communication with the portable telephone 10 and is provided with preliminary reception unit for carrying out an operation to be done before the portable terminal 10 enters the specific area 1. When the portable telephone 10 makes access to the preliminary reception unit, the preliminary reception unit notifies the portable telephone 10 of a type of application or content necessary in the specific area.

Fig. 17 also shows a portable telephone 10a for carrying out short-distance wireless communication with the entrance ticket issuing gate 6, a portable telephone 10b in the download area 5, a portable telephone 10c for reading the active RF tag of the entrance gate 2, and a portable telephone 10d for reading the active RF tag of the exit gate 3.

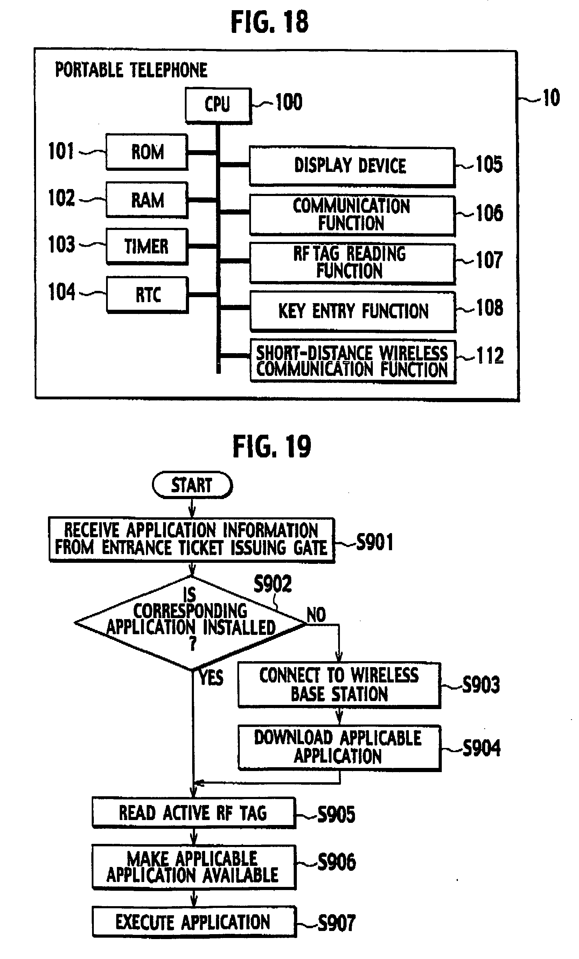

As shown in Fig. 18, the portable telephone 10 according to the fifth embodiment has a CPU 100, a ROM 101, a RAM 102, a timer 103, a RTC 104, a display device 105, a communication function 106, an RF tag reading function 107, a key entry function 108, and a short-distance wireless communication function 112.

The short-distance wireless communication function 112 may use infrared rays or electric waves such as Bluetooth. The function does not necessarily have to be realized with wireless communication and can also be realized a wired communication function such as USB.

The CPU 100, the ROM 101, the RAM 102, the timer 103, the RTC 104, the display device 105, the communication function 106, the RF tag reading function 107, and the key entry function 108 are similar to those in the first embodiment, and the description thereof is thus omitted.

Further, the portable telephone 10 includes preliminary access unit for performing an operation to be carried out beforehand towards the service providing system in order to enter the specific area 1. When the preliminary access unit makes an access to the system, an application or content necessary in the specific area is notified by equipment of the system side or a network connecting function of the portable telephone via a network.

Thereafter, the specific area service downloading unit downloads an application or content by wire or wirelessly.

### (Service Providing Method)

Next, a service providing method according to the fifth embodiment is described with reference to Fig. 19.

Fig. 19 shows processing carried out in the portable telephone 10 shown in Fig. 18 when the portable telephone 10 passes through the entrance ticket issuing gate 6 and entrance gate 2 shown in Fig. 17.

First of all, in step S901, the portable telephone 10 receives application information from the entrance ticket issuing gate 6. The portable telephone 10 communicates with the entrance ticket issuing gate 6 using a short-distance wireless communication function and receives a gate ID and a type of application as the application information.

Next, in step S902, the portable telephone 10 determines whether corresponding application is installed within itself. If there is no applicable application, the portable telephone 10 connects itself to the wireless station 4 in step S903 and then downloads an applicable application in step S904.

Next, in step S905, the portable telephone 10 reads the active RF tag of the entrance gate 2. Information notified by the active RF tag includes an "gate ID" representing the identification number of the gate, an "entrance/exit identifier" indicating the gate is the entrance or the exit, a "type of application" necessary within the specific area, and a "usage identifier" described in the fourth embodiment. Thereafter, as described in the fourth embodiment, the portable telephone 10 makes the applicable application available in step S906 and executes the application in step S907.

Note that the application information does not necessarily have to be notified by the entrance ticket issuing gate 6. The application information can also be notified before the portable telephone 10 enters the specific area, for example, when an entrance ticket is purchased beforehand through online shopping.

### (Operations and Effects)

In the fifth embodiment, the portable telephone 10 is provided with unit for receiving a type of application or content via a network before the portable telephone 10 enter the specific area, for example, when an entrance ticket is purchased from a vending machine or through a network. Moreover, the portable telephone is provided with unit for downloading the obtained type of application or content before entering the specific area.

In an area where a portable telephone is not allowed to use, such as a cabin of a plane, a portable telephone cannot download an application through a public wireless network. However, the fifth embodiment enables an application to be downloaded in such a situation.

Therefore, even when entering a specific area where wireless communication is not permitted, a user can receive a service of the specific area appropriately.

### <Sixth Embodiment>

### (Service providing system)

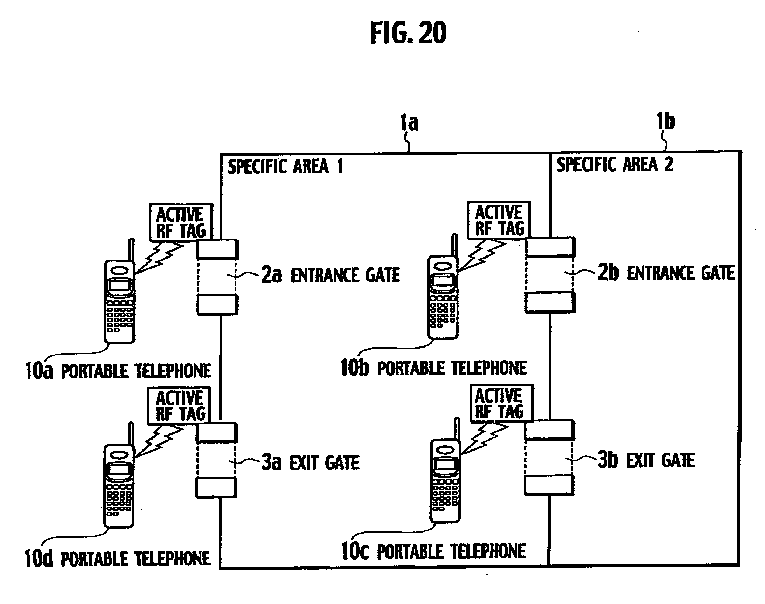

As shown in Fig. 20, a service providing system according to a sixth embodiment includes a plurality of specific areas, and, in this case, there are two types of specific areas: a specific area 1 and a specific area 2. Let us assume a theme park as an example where applications necessary in a plurality of areas is multiplied. For example, in the theme park, the specific area 1 performs a function to provide information of the park and the specific area 2 performs a function used for a specific attraction.

The service providing system according to the sixth embodiment has a plurality of gates installed at entrances. (In this case, there are two entrance gates 2a and 2b.) Each of the entrance gates 2a and 2b is provided with partial enable notifying unit for notifying a partial enable signal by means of wireless communication. The partial enable signal makes a part of a function of an application or content available. The application or content is pre-stored in a portable telephone 10 and necessary in a specific area.

Moreover, the service providing system according to the sixth embodiment has a plurality of gates installed at exits.
(In this case, there are two exit gates 3a and 3b.)

Each of the exit gates 3a and 3b is provided with partial disabling notifying unit for notifying a partial disable signal by means of wireless communication. The partial disable signal disables a part of a function of an application or content pre-stored in the portable telephone 10 and necessary in a specific area.

Furthermore, as shown in Fig. 14, the portable telephone 10 according to the sixth embodiment includes connecting unit 8 to a communication network, application executing unit 9 for executing an application, and specific area service determining unit 11, specific area service enabling unit 15, specific area service disabling unit 16, enable signal detecting unit 17, and disable signal detecting unit 18.

The enable signal detection unit 17 detects a partial enable signal notified by the entrance gate 2a or 2b.

The specific area service determining unit 11 determines from the detected partial enable signal that a part of a function of a specific application or content is now necessary. The specific area service determining unit also determines from a detected disable signal that a part of a function of a specific application or content is no longer necessary.

The specific area service enabling unit 15 makes the part of the function of the application or content available based upon a result of determination made by the specific area service determining unit 11.

The disable signal detecting unit 18 detects a partial disable signal notified by the exit gate 3a or 3b.

The specific area service disabling unit 16 disables a part of a function of an application or content based upon a result of determination made by the specific area service determining unit 11.

### (Service Providing Method)

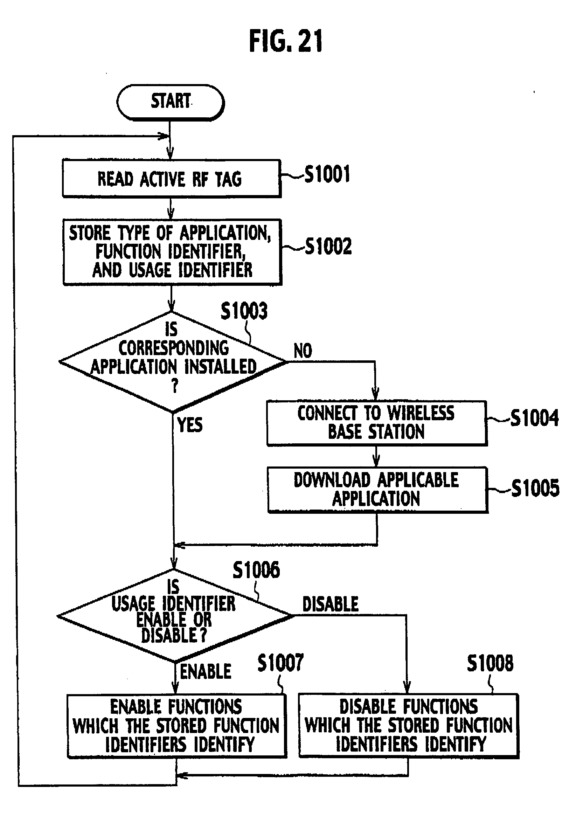

Next, a service providing method according to the sixth embodiment is described with reference to Fig. 21.

Fig. 21 shows processing carried out in a portable telephone 10 shown in Fig. 14 when the portable telephone 10 passes through the entrance gate or the exit gate shown in Fig. 20.

First of all, in step S1001, the portable telephone 10 reads an active RF tag of the entrance gate 2a or 2b. Information notified by the active RF tag includes a function identifier in addition to that described in the fourth embodiment. The function identifier is a label attached to each of the functions of an application. Therefore, control over availability and unavailability of each function of an application can be performed.

Next, in step S1002, the portable telephone 10 stores a type of application, a functional identifier, a usage identifier and the like using a RAM 102 or the like.

Next, in the step S1003, the portable telephone 10 determines whether corresponding application is installed within itself. If there is no applicable application, the portable telephone 10 connects itself to a wireless base station 4 in step S1004, and then downloads an applicable application in step S1005.

Next, in step S1006, the portable telephone 10 determines whether the usage identifier is an enable signal or a disable signal. Where the usage identifier is an enable signal, the portable telephone 10 enables functions which the stored function identifiers identify in step S1007. Where the usage identifier is a disable signal, the portable telephone 10 disables functions which the stored function identifiers identify in step S1008.

### (Operations and Effects)

In the sixth embodiment, every time the portable terminal passes through a plurality of gates, each gate notifies the portable telephone of a passing event, and the terminal then determines that it has passed a specific gate among the plurality of gates. Based upon the determination, the terminal enables a part of a function of a pre-stored application to be operated or disables the same.

To be more specific, a plurality of gates capable of wireless communication with a portable telephone is installed at entrances or exits of specific areas. When the portable telephone passes through one of the gates, the gate notifies the portable telephone of a signal, which makes a part of a function of an application necessary in a specific area available or unavailable. The portable telephone has a function to make the part of or the entire function of the application or content available or unavailable based on the signal obtained from the gate.

Accordingly, when a portable telephone passes through a plurality of gates, it becomes possible to perform control over availability and unavailability of a part of a function of an application or content for each gate. Therefore, a user can receive a service suitable for a specific area appropriately. Another advantageous effect is that a service provider can provide a plurality of users in each specific area with an appropriate service.

### <Seventh Embodiment>

### (Service Providing System)

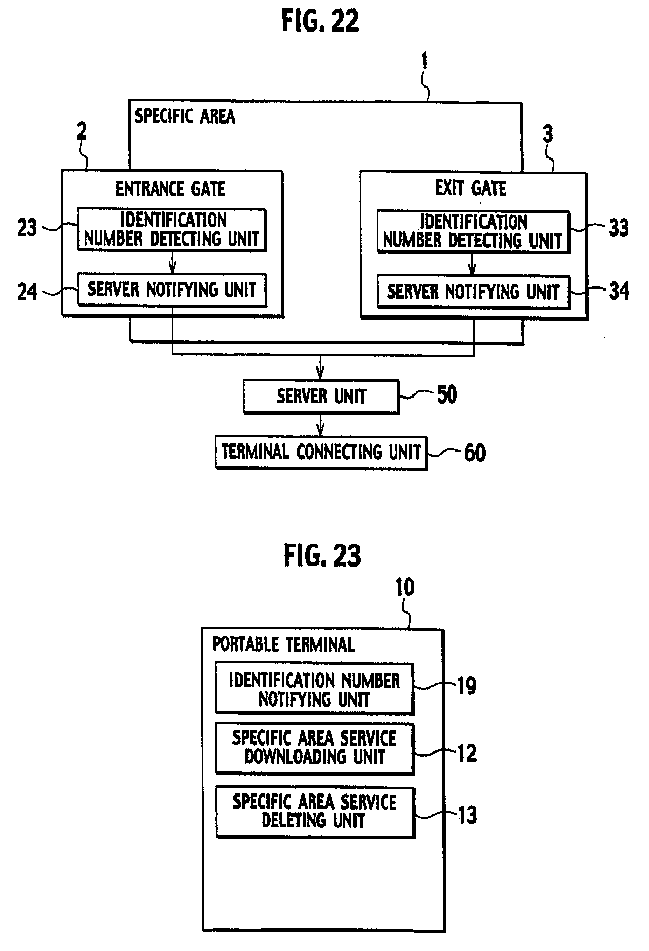

As shown in Fig. 22, a service providing system according to a seventh embodiment includes an entrance gate 2 and an exit gate 3. The entrance gate 2 is installed at the entrance of a specific area 1 and has a function of wireless communication with a portable telephone 10. The exit gate 3 is installed at the exit of the specific area 1 and has a function of wireless communication with the portable telephone 10.

The entrance gate 2 is provided with identification number detecting unit 23 for detecting an identification number from the portable telephone 10 having a function of wireless communication with the gate, and server notifying unit 24 for notifying server unit 50 of the identification number detected by the identification number detecting unit 23.

The server unit 50 is located at an arbitrary position relative to the specific area and provides the portable terminal with an application or content necessary in the specific area.

Moreover, the server unit 50 may select an application to be transmitted to the portable terminal in accordance with the identification number detected by the identification number detecting unit 23. The server unit 50 may also decide startup parameters (for example, user attribute, a registration number, points, history and the like) given when starting an application in accordance with the identification number detected by the identification number detecting unit 23, and provide the portable terminal with the application or content.

Herein, the user attribute is, for example, attribute (for example, age, distinction of sex, points, name, address and the like) concerned with the application, and is registered by the user having the terminal with the identification number in advance. The application can provide the function or information, which is suitable for the user, by setting up the attribute as startup parameters. For example, in a museum, expressing *kanji* is reduced by the age. In an exhibition pavilion, a commodity guiding by the application is changed by the distinction of sex. In an exhibition of the products, the destination of the product buying by the user is easily registered by the name and the address.

Moreover, the point is, for example, added when the service is used, every user having the terminal with the identification number. Different service can be provided in compliance with the number of the point, by setting up the point as startup parameters. For example, in a shopping center, the user having large points can get a coupon ticket.

Furthermore, the history is, for example, stored in a server, when the service is used, every user having the terminal with the identification number. For example, in a museum, an item never seen by the user can be introduced, by setting up the history as startup parameters.

Terminal connecting unit 60 is placed at an arbitrary position relative to the specific area, and connects itself to the portable terminal using arbitrary communication unit to transmit the application or content given from the server unit 50.

The exit gate 3 is provided with identification number detecting unit 33 for detecting an identification number from the portable telephone 10 having a function of wireless communication with the gate, and server notifying unit 34 for notifying the server unit 50 of the identification number detected by the identification number detecting unit 33.

As shown in Fig. 23, the portable telephone 10 according to the seventh embodiment includes identification number notifying unit 19, specific area service downloading unit 12, and specific area service deleting unit 13. The unit described in the first to sixth embodiments may also be added to the portable telephone 10.

The identification number notifying unit 19 notifies the gate installed at the entrance or the exit of the specific area of an identification number of a portable terminal. The identification number notifying unit 19 may also be realized as the function of the gate signal detecting unit 14, the enable signal detecting unit 17, or the disable signal detecting unit 18.

The specific area service downloading unit 12 downloads an application or content necessary in the specific area by wire or wirelessly.

The specific area service deleting unit 13 deletes an unnecessary application or content.

Where startup parameters are notified by the server unit 50, the application executing unit 9 (see Fig. 2) starts an application based upon the notified startup parameters.

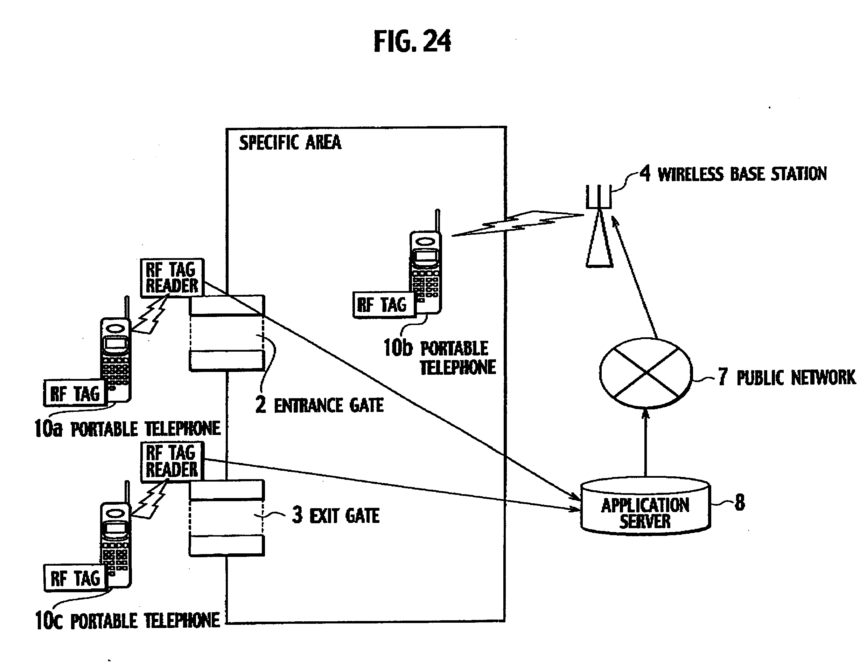

Fig. 24 shows an example of a service providing system according to the seventh embodiment. In this example, a portable telephone 10 incorporates an RF tag, and RF tag readers installed in entrance and exit gates 2 and 3 read the RF tag of the portable telephone 10. The information read by the readers includes ID of the portable telephone. The read ID is then notified to an application server 8 connected to a public network 7, and the application server transmits a necessary application through the public network to the portable telephone represented by the notified ID. This method of transmission may also be substituted by, for example, sending an e-mail to the portable telephone to notify the address of the site where the application is present and making an access to the address using the portable telephone to download the application.

### (Operations and Effects)

According to the portable terminal and service providing system according to the seventh embodiment, where the RF tag is mounted on the portable telephone 10 and the RF tag reading functions are incorporated in the gates, the advantageous effects described in the first to sixth embodiments can also be achieved.

Moreover, in the seventh embodiment, the server unit 50 can provide each portable telephone 10 with an application or content.

Further, in the seventh embodiment, the server unit 50 can select an application to be transmitted to a portable terminal and decide startup parameters for starting an application in accordance with a detected identification number. Therefore, by changing a type of application or startup parameters for each portable terminal, flexible control suitable for each portable terminal can be realized.

### <Eighth Embodiment>

### (Service Providing System)

Similarly to the first embodiment, portable telephone according to an eighth embodiment, includes connecting unit 8 to a communication network, application executing unit 9 for executing an application, specific area service determining unit 11, specific area service downloading unit 12, specific area service deleting unit 13, gate signal detecting unit 14, and specific area service controlling unit 120.

When it is determined that an application, content, or a part of a function of an application is necessary, the specific area service determining unit 11 downloads the application, content, or the part of the function of the application, or makes the same available in accordance with a user' s operation or a condition determined in a terminal in advance.

For example, the "user's operation" may be an operation carried out by a user to permit downloading, and the "condition predetermined in a terminal" may be a remaining battery capacity at a specified level or higher.

### (Service Providing Method)

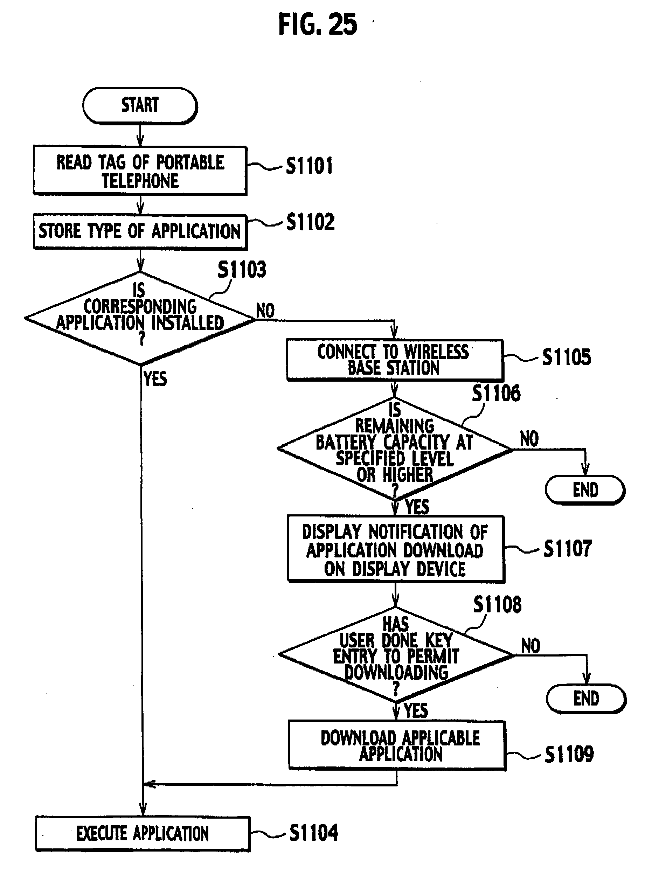

Next, a service providing method according to the seventh embodiment is described with reference to Fig. 25.

Fig. 25 shows processing carried out in the portable telephone 10 in the service providing system shown in Fig. 24. Here, downloading is carried out only when a remaining battery capacity is at a specified level or higher and a user carries out an operation to permit downloading. These conditions for downloading are mere examples and a part of the conditions or additional conditions can also be used.

First of all, in step S1101, an entrance gate 2 reads an active RF tag of a portable telephone 10. Information notified by the RF tag includes a "gate ID" representing the identification number of the gate, an "entrance/exit identifier" indicating that the gate is the entrance or the exit, and a "type of application" necessary within a specific area.

Next, in steps S1102, the portable telephone 10 stores the type of application using a RAM 102 or the like.

Next, in step S1103, the portable telephone 10 determines whether corresponding application is installed within itself. If there is such an applicable application, the portable telephone 10 executes the application in step S1104.

Meanwhile, where there is no applicable application, the portable telephone 10 connects itself to a wireless station 4, and then determines whether a remaining battery capacity is at a specified level or higher in step S1106.

Next, in step S1107, the portable telephone 10 causes a display device to display the notification of downloading an application. Thereafter, in step S1108, the portable telephone 10 determines whether the user has carried out a key entry to permit the downloading.

Once the key entry is done, the portable telephone 10 downloads the applicable application in step S1109 and executes the same in step S1104.

### (Operations and Effects)

According to the portable telephone 10 and the service providing system of the eighth embodiment, provided is a function to determine whether an application or content is to be downloaded or made available based upon an inquiry for a user whether to proceed downloading, or in accordance with a condition predetermined in a terminal. This determination is made before downloading the application or content or making it available.

Accordingly, inconvenient situation, for example, where an application or content is downloaded or made available against user's will are avoided, thus improving user-friendliness.

### <Ninth Embodiment>

In a ninth embodiment, description is provided with regard to a case where a portable telephone 10 includes a function to obtain positional information of a wireless base station with which the portable telephone 10 communicates.

### (Service Providing System)

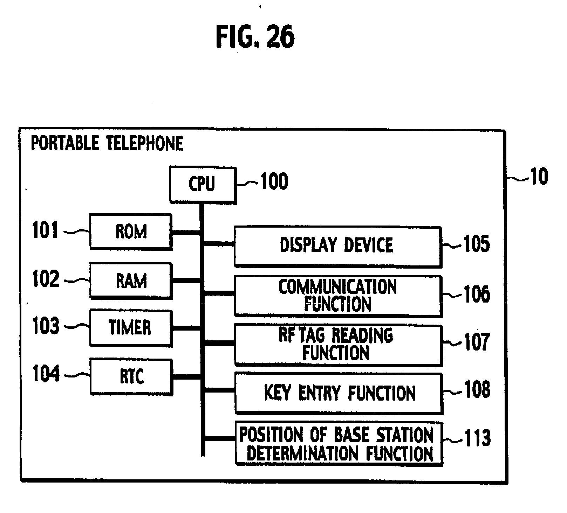

As shown in Fig. 26, the portable telephone 10 according to the ninth embodiment incorporates position of base station determination function 113 as the function of obtaining positional information of a wireless base station.

The position of base station determination function 113 obtains identification information (ID information) or geographic positional information of the wireless base station when communicating with the wireless base station. Thereafter, the position of base station determination function 113 determines whether the obtained ID information or geographic positional information matches the ID or geographic positional information of a base station in an area where execution of an application is permitted. In this event, positioning accuracy ranges between several hundreds meters and several kilometers depending on the location of the base station.

Moreover, when an effective geographic area for an application or content is notified, or when the same if notified as information associated with a downloaded application or content, specific area service deleting unit 13 of the portable telephone 10 stores the geographic area. Thereafter, the specific area service deleting unit 13 deletes the application or content once the position of the portable telephone is away from the stored geographic area, based upon a result of determination made by the position of base station determination function 113.

Note that, where the portable telephone 10 is in a specific area but cannot communicate with a base station, that is, when it is "out of service," it is determined that the position of the wireless base station is uncertain and the application is not disabled.

Further, where the portable telephone 10 in a specific area communicates with a plurality of neighboring base stations, positional information of the base stations may be set and an application may be disabled when the portable telephone 10 is away from the positions of all base stations.

The rest of functions of the portable telephone 10 are similar to those in the first embodiment, and the description thereof is thus omitted.

### (Service Providing Method)

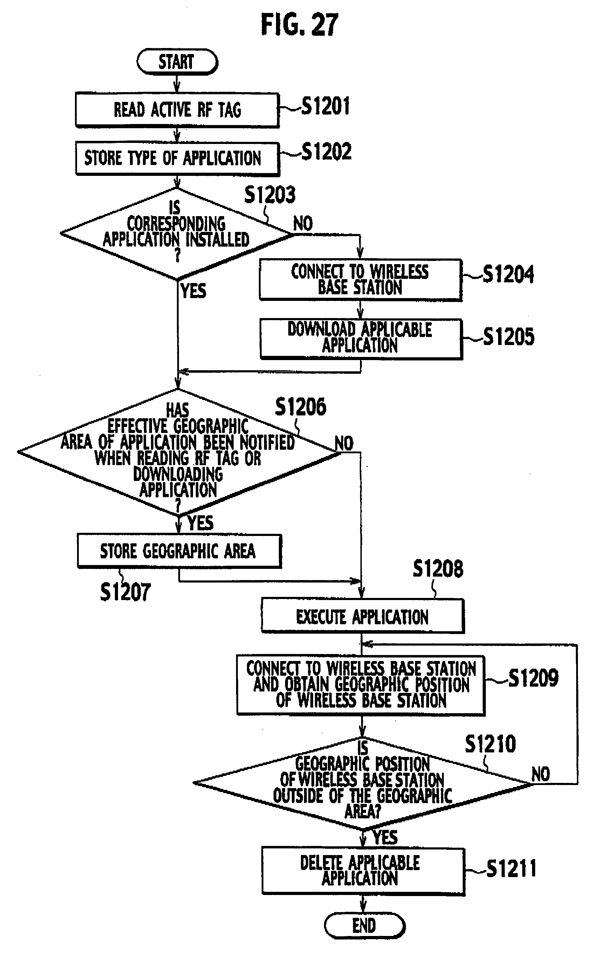

Next, a service providing method according to the ninth embodiment is described with reference to Fig. 27.

First of all, processing between steps S1202 to 1208 is similar to that between steps S601 to 608 in Fig. 12, and the description thereof is thus omitted.

In step S1209, the portable telephone 10 connects itself to a wireless base station and obtains ID information or geographic positional information of the wireless base station from the wireless base station or a network connected through the wireless base station.

Thereafter, in step S1210, the portable telephone 10 determines whether the geographic position of the wireless base station to which the portable telephone 10 is connected is outside of the stored geographic area. If that is the case, the portable telephone 10 deletes an applicable application in step S1211.

### (Operations and Effects)

In the ninth embodiment, when the portable telephone 10 passes through the entrance gate 2 and the gate notifies the portable telephone of a type of application or content necessary in the specific area, the gate also notifies an effective area of the application or the content. Moreover, the portable telephone 10 is provided with the position of base station determination function and deletes the application or content once the geographic position of the wireless base station is outside the effective area. Accordingly, even where the power supply of the portable telephone is turned off when passing through the exit gate 3 or the portable telephone leaves the specific area without passing though the exit gate 3, the application or content can be deleted automatically.

The third embodiment was the case where the portable telephone 10 includes the GPS function. Meanwhile, in the ninth embodiment, whether a portable telephone is away from a specific area can be determined without incorporating the GPS function, which contributes to a cost reduction of a portable terminal.

Note that, in the ninth embodiment, positioning accuracy for specifying a position of a portable telephone is not so high as several tens of meters in the third embodiment. Nevertheless, if deletion of an application is not required immediately after a portable telephone is out of a specific area, this method has a sufficient effect.

### <Tenth Embodiment>

In a tenth embodiment, described is a case where specific area service notifying unit installed in an entrance gate and gate signal detecting unit in a portable telephone use a wireless LAN.

Function expansion of portable telephone terminals has been seen; there are a terminal not only with a function of communicating with portable telephone base stations but also with a wireless LAN communication function such as IEEE802. 11b. A terminal of this kind realizes wireless LAN communication including voice communication in limited areas such as in an office, but works as a normal portable telephone outside the office.

There have been studies on how to determine which area, a portable telephone network area or a wireless LAN area, a terminal is to be connected to when a user moves back and forth between the two areas.

One of them is an UMA (unlicensed mobile access) technology developed by an industry group of portable telephone carriers and handset manufacturers. With this technology, when a user of a portable telephone moves between a portable telephone network and other networks such as a wireless LAN (UMAN: unlicensed mobile access network) , networks are switched automatically without making the user aware of it.

In order to do so, it is necessary to automatically notify a portable telephone terminal of presence of UMA when the terminal enters the UMAN area, and the terminal need to have a function to detect such notification.

### (Service Providing System)

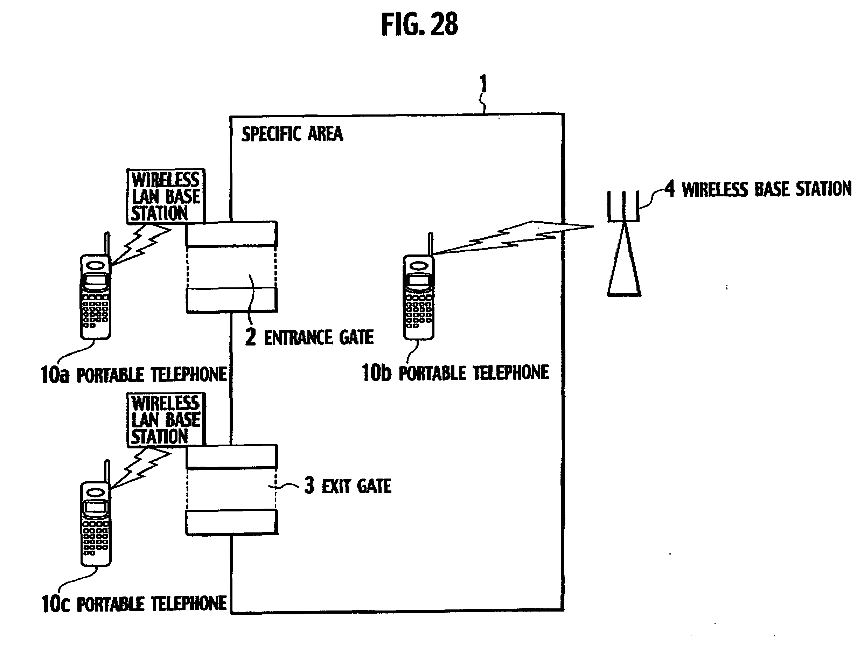

Next, Fig. 28 describes an example where a wireless LAN is used as specific area service notifying unit 21 of the service providing system. Fig. 28 also shows a portable telephone 10a capable of communicating with a wireless LAN base station of an entrance gate 2, a portable telephone 10b for downloading an application through a wireless circuit, and a portable telephone 10c capable of communicating with a wireless LAN base station of an exit gate 3.

A base station from which an application is downloaded through a wireless circuit may be a one in a portable telephone network or one in a wireless LAN. In Fig. 28, a base station in a portable telephone network is used. Using a base station in a portable telephone network has an advantage in cost reduction; a service provider within a specific area does not have to install a sufficient number of wireless LAN base stations for downloading an application. This advantage is particularly remarkable when a specific area is large.

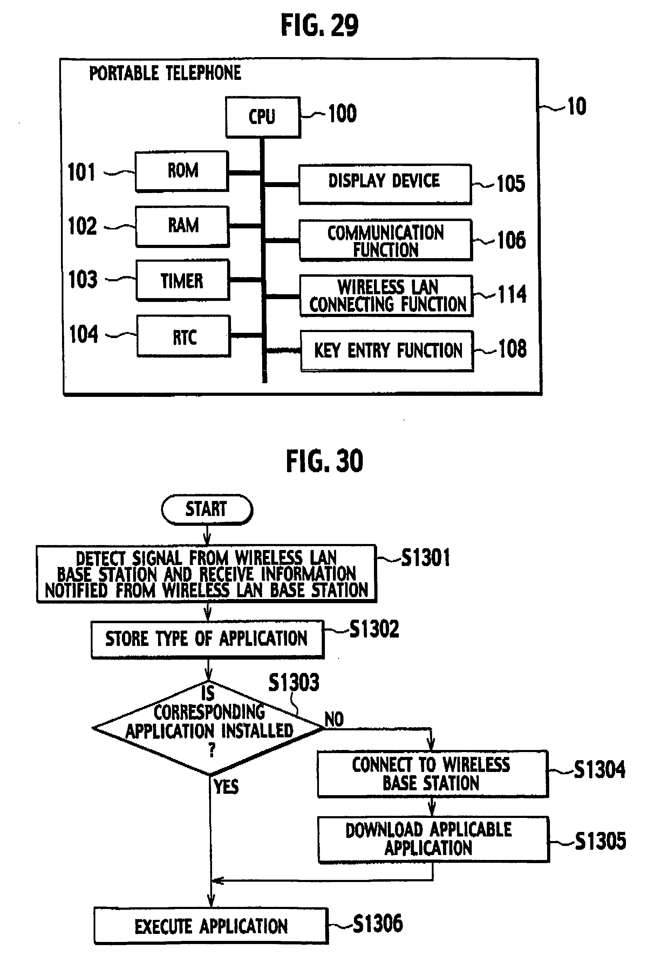

Fig. 29 shows a structure of the portable telephone 10 as a specific example of a portable terminal. The portable telephone 10 includes a CPU 100, a ROM 101, a RAM 102, a timer 103, a RTC 104, a display device 105, a communication function 106, a wireless LAN connecting function 114, and a key entry function 108.

The wireless LAN connecting function 114 is connected to and communicates with the wireless LAN. For example, the wireless LAN connecting function 114 may detect UMAN for realizing the foregoing UMA and may be provided as the gate signal detecting unit 14.

Where the portable telephone 10 is set to use the UMAN, the wireless LAN connecting function 114 steadily detects the UMAN. This detection function is implemented to realize a call function of the portable telephone and allows the portable telephone to have basic operations to work as one compliant with UMA. Therefore, it is expected to always operate the wireless LAN function connection function 114.

The rest of the functions of the portable telephone 10 are similar to those in the first embodiment, and the description thereof is thus omitted.

### (Service Offering Method)

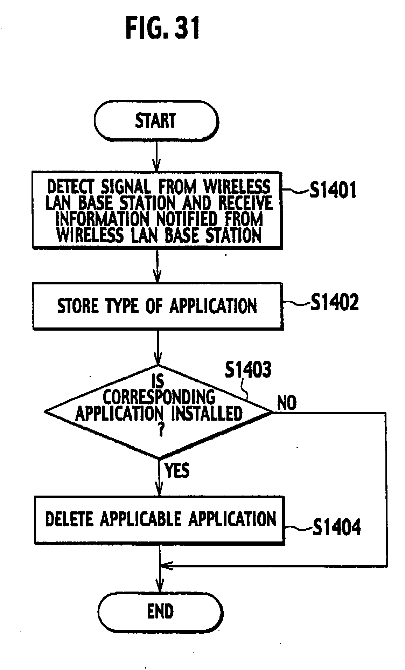

Next, a service providing method according to the tenth embodiment is described with reference to Figs. 30 and 31.

Fig. 30 shows processing carried out in the portable telephone 10 shown in Fig. 29 when the portable telephone 10 passes through the entrance gate 2 shown in Fig. 28. As for timing of reading information notified from the wireless LAN base station, the portable telephone 10 may always be able to read it or may read it in accordance with a user's operation.

First of all, in step S1301, the portable telephone 10 detects a signal transmitted from the wireless LAN base station installed in the entrance gate 2 and receives information notified from the wireless LAN base station. Information notified by the wireless LAN base station includes a "gate ID" representing the identification number of the gate, an "entrance/exit identifier" indicating the gate is the entrance or exit, and a "type of application" necessary within the specific area. In the example shown in Fig. 30, the "entrance/exit identifier" indicates an entrance. Therefore, application executing unit 9 may use the "type of application" from the wireless LAN base station as it is to determine an application necessary in the specific area.

Next, processing between steps S1302 and S1306 is similar to that between steps S102 and S106 shown in Fig. 5, and the description thereof is thus omitted.

Next, Fig. 31 shows processing carried out in the portable telephone 10 shown in Fig. 29 when the portable telephone 10 passes through the exit gate 3 shown in Fig. 28. As for timing of reading information notified by the wireless LAN base station, the portable telephone may always be able to read it or may read it in accordance with a user's operation.

First of all, in step S1401, the portable telephone 10 detects a signal transmitted from the wireless LAN base station installed in the exit gate 3 and receives the information notified by the wireless LAN base station. Information notified by the wireless LAN base station notifies includes a "gate ID" representing the identification number of the gate, an "entrance/exit identifier" indicating that the gate is the entrance or exit, and a "type of application" which becomes unnecessary when the portable telephone leaves the specific area. In the example shown in Fig. 31, the "entrance/exit identifier" indicates an entrance.

Next, processing between steps S1402 and S1404 is similar to that between steps S202 and S204 shown in Fig. 6, and the description thereof is thus omitted.

### (Operations and Effects)

In the first embodiment, passage of a portable terminal through a gate is detected using a function of reading an active RF tag. However, reading of an active RF tag is highly dependent on an application as compared to implementation of UMA. Therefore, application' s operating conditions or a setting status of an application by a user could often prevent reading. However, in the tenth embodiment, detection of UMAN is used for detection of passage of the gate, which enables an event which passed through a gate to be obtained with greater reliability.

### <Other Embodiments>

The present invention has been described according to the foregoing first to second embodiments. However, it should be understood that the description and drawings which partially constitute the present disclosure do not limit this invention. From this disclosure, various alternative embodiments, embodiments and operational technologies will become apparent to those skilled in the art.

For example, in the first embodiment, the specific area service notifying unit 21 notifies an effective period, effective time, an effective geographic area for an application or content, or an expiry time for an application or content together with the application or content. However, the specific area service notifying unit 21 can also notify a type of gate.

Similarly, in the portable terminal 10, the gate signal detecting unit 14, the enable signal detecting unit 17, or the disable signal detecting unit 18 may detect the type of gate. Moreover, the specific area service determining unit 11 may determine an application or content, or a part of a function of an application, both necessary in the specific area or to be deleted, by using a specific area service correspondence table in which each type of gate and correspond to specific area service in a specific area where the corresponding gate is installed. The corresponding table may be preset within the terminal.

Further, the specific area service correspondence table may be held by the server unit 50 connected to a communication network as described in the seventh embodiment, and the specific area service determining unit 11 may use the specific area service correspondence table held by the server unit 50 using the connecting unit 8 to a communication network.

Various modifications will become possible for those skilled in the art after receiving the teachings of the present disclosure without departing from the scope thereof.

## Claims

1. A service providing system for providing a portable terminal having a wireless communication function with a service effective only in a specific area, comprising:
an entrance gate, installed at an entrance of the specific area, includes specific area service notifying unit configured to notify the portable terminal of a type of service necessary in the specific area by means of wireless communication.

2. The service providing system according to claim 1, further comprising:
an exit gate, installed at an exit of the specific area, includes service deletion notifying unit configured to notify the portable terminal of a type of service to be deleted by means of wireless communication.

3. A service providing system for providing a portable terminal having a wireless communication function with a service effective only in a specific area, comprising:
an entrance gate, installed at an entrance of the specific area, includes enable notifying unit configured to notify the portable terminal of an enable signal by means of wireless communication, the enable signal making a service pre-stored in the portable terminal and necessary in the specific area available.

4. The service providing system according to claim 3, further comprising:
an exit gate, installed at an exit of the specific area, includes disable notifying unit configured to notify the portable terminal of a disable signal by means of wireless communication, the disable signal disabling the service pre-stored in the portable terminal and necessary in the specific area.

5. The service providing system according to one of claims 1, 2, 3, and 4,
wherein the entrance gate or the exit gate further includes identification number detecting unit configured to detect an identification number from the portable terminal having the wireless communication function for wirelessly communicating with the gates, and server notifying unit configured to notify server unit of the identification number detected by the identification number detecting unit, and
the service providing system further comprising:
the server unit configured to provide the portable terminal with the service necessary in the specific area; and
terminal connecting unit configured to transmit the service from the server unit to the portable terminal.

6. The service providing system according to claim 5,
wherein the server unit selects a service to be transmitted to the portable terminal or decide a startup parameter based upon the identification number detected by the identification number detecting unit, and provides the portable terminal with the service.

7. A portable terminal including connecting unit to a communication network and application executing unit, comprising:
a gate signal detecting unit configured to detect a signal transmitted from an entrance gate installed at an entrance of a specific area by means of wireless communication;
specific area service determining unit configured to determine from the transmitted signal that a specific service is now necessary; and
specific area service downloading unit configured to download the service by wire or wirelessly based upon a result of determination made by the specific area service determining unit.

8. The portable terminal according to claim 7,
wherein the gate signal detecting unit detects a signal transmitted by an exit gate installed at an exit of the specific area by means of wireless communication,
the specific area service determining unit determines from the signal transmitted from the exit gate that a specific service is to be deleted, and
the portable terminal further comprising specific area service deleting unit configured to delete the service based upon a result of determination made by the specific area service determining unit.

9. The portable terminal according to claim 8,
wherein the specific area service deleting unit activates a timer when an effective period for the service is notified and deletes the service upon timer time out, or, when expiry time for the service is notified, stores the expiry time and deletes the service once a clock in the portable terminal reaches the stored time.

10. The portable terminal according to one of claims 7, 8, and 9, further comprising:
specific area service controlling unit configured to store effective time for the service when such effective time is notified, make the service unavailable, and when the clock in the portable terminal reaches the stored time make the service available.

11. The portable terminal according to one of claims 7, 8, and 9,
wherein the gate signal detecting unit operates by using a dedicated power supply or using energy of electric waves transmitted from the gate as a power supply even if a power supply of the terminal is off, and stores a type of the gate through which the terminal has passed, a type of service required in the specific area or a type of service to be deleted.

12. The portable terminal according to claim 11,
wherein the specific area service determining unit determines whether the type of gate through which the terminal has passed, the type of service necessary in the specific area, or the type of service to be deleted is stored, when the power supply of the portable terminal is turned on, and
the specific area service downloading unit downloads the service by wire or wirelessly based upon a result of determination made by the specific area service determining unit, or
the specific area service deleting unit deletes the service based upon a result of determination made by the specific area service determining unit.

13. The portable terminal according to claim 8, further comprising:
positioning unit configured to measure a geographic position,
wherein the specific area service deleting unit deletes the service, in a case where a geographic area is notified, once a position of the terminal is away from the stored geographic area based upon a positioning result by the positioning unit.

14. The portable terminal according to claim 8, further comprising:
a position determining unit configured to obtain information of an identifier or a geographic position of a wireless base station which communicates with the portable terminal,
wherein the specific area service deleting unit deletes the service once the position of the portable terminal is away from the geographic area based upon a result of determination made by the position determining unit.

15. A portable terminal including connecting unit with a communication network and application executing unit, comprising:
enable signal detecting unit configured to detect an enable signal transmitted by means of wireless communication from an entrance gate installed at an entrance of a specific area;
specific area service determining unit configured to determine from the enable signal that a specific service is now necessary; and
specific area service enabling unit configured to make the service available based upon a result of determination made by the specific area service determining unit.

16. The portable terminal according to claim 15, further comprising:
disable signal detecting unit configured to detect a disable signal transmitted by means of wireless communication from an exit gate installed at an exit of the specific area,
wherein the specific area service determining unit determines from the disable signal that a specific service is no longer necessary, and
the portable terminal further comprising specific area service disabling unit for disabling the service based upon a result of determination made by the specific area service determining unit.

17. The portable terminal according to claim 7 or 15, further comprising:
preliminary access unit configured to perform an operation to be carried out towards a system before entering the specific area,
wherein a service necessary in the specific area is notified via equipment on the system side or a network using a network connection function of the portable terminal when the preliminary access unit makes an access to the system, and
the specific area service downloading unit downloads the service by wire or wirelessly.

18. The portable terminal according to claim 15,
wherein the enable signal detecting unit detects a partial enable signal notified from the entrance gate,
the specific area service determining unit determines from the partial enable signal that a part of a specific service is now necessary, and
the specific area service enabling unit makes a part of the service available based upon a result of determination made by the specific area service determining unit.

19. The portable terminal according to claim 15,
wherein the disable signal detecting unit detects a partial disable signal notified by the exit gate,
the specific area service determining unit determines from the partial disable signal that a part of a specific service is no longer necessary, and
the specific area service disabling unit disables a part of the service based upon a result of determination made by the specific area service determining unit.

20. The portable terminal according to claim 7 or 15,
wherein the gate signal detecting unit, the enable signal detecting unit, or the disable signal detecting unit is provided with a function of notifying the entrance gate or the exit gate of an identification number of the portable terminal.

21. A control computer program product to be executed by a portable terminal, comprising:
instructions configured to detect a signal transmitted by means of wireless communication from an entrance gate installed at an entrance of a specific area to a portable terminal having connecting unit to a communication network and application executing unit;
instructions configured to determine from the transmitted signal that a specific service is now necessary; and
instructions configured to download the service by wire or wirelessly based upon a result of determination made at the step of determining that the specific service is now necessary.
